# EUROPÄISCHE PATENTSCHRIFT

(11) **EP 1 825 750 B1**
(45) Veröffentlichungstag und Bekanntmachung des Hinweises auf die Patenterteilung: **01.07.2009**
(21) Anmeldenummer: 06003635.7
(22) Anmeldetag: 22.02.2006
(51) Int. Cl.: A01N 25/02, A01N 37/10, A01N 37/40

(54) **System zur Ausbringung landwirtschaftlicher Chemikalien**
System for delivering agricultural chemicals
Système pour distribuer des produits chimiques agricoles

(43) Veröffentlichungstag der Anmeldung: 29.08.2007
(73) Patentinhaber: Menno Chemie-Vertrieb GmbH, 22850 Norderstedt (DE)
(72) Erfinder: Nevermann, Jan, 22848 Norderstedt (DE); Zerling, Wolfgang, 24568 Kaltenkirchen (DE)
(74) Vertreter: Becker Kurig Straus

(56) Entgegenhaltungen:
- EP-A- 1 110 452
- EP-A1- 1 393 713
- WO-A-93/16611
- WO-A-03/103396
- DATABASE WPI Week 200527 Derwent Publications Ltd., London, GB; AN 2005-255823 XP002424827 & JP 2005 060273 A (DAIICHI SEIMO KK) 10. März 2005 (2005-03-10) -& DATABASE EPODOC [Online] EUROPEAN PATENT OFFICE, THE HAGUE, NL; XP002424828 & JP 2005 060273 A 10. März 2005 (2005-03-10)

## Beschreibung

Die Erfindung betrifft ein Verfahren zur Herstellung stabiler, von bis zu 20 gew.-%iger Lösungen von in Wasser schwer löslichen sauren organischen Verbindungen, wobei die Lösungen gleichzeitig anorganische Salze in einer Konzentration von bis zu 20 Gew.-% enthalten. Die Erfindung betrifft weiterhin ein stabiles Konzentrat von in Wasser schwer löslichen sauren organischen Verbindungen, das gleichzeitig anorganische Salze in hoher Konzentration enthält. Weiterhin betrifft die Erfindung die Verwendung eines nach dem erfindungsgemäßen Verfahren herstellbaren stabilen Konzentrats zur Herstellung von Lösungen mit anderen Konzentrationen in anderen Lösungsmitteln sowie eine Zusammensetzung, enthaltend ein nach einem erfindungsgemäßen Verfahren herstellbares stabiles Konzentrat zur Herstellung von Lösungen mit anderen Konzentrationen in anderen Lösungsmitteln.

In der Chemie ist es für zahlreiche Prozessschritte wünschenswert, eine stabile Lösung herstellen zu können, die zu einem beliebigen späteren Zeitpunkt in ein Lösungsmittel mit anderen physikalischen Eigenschaften überführt und dadurch leichter in eine prozessgerechte Form und Konzentration gebracht werden kann, die dem angestrebten Produkt entspricht.

Für die große Mehrzahl chemischer Substanzen sind geeignete Lösungsmittel bekannt, die die Herstellung von beliebigen Lösungen gestatten. Die Lösungsmittel werden aufgrund ihrer physikalischen und chemischen Eigenschaften ausgewählt, wobei die zu lösenden Stoffe ähnliche Eigenschaften wie die Lösungsmittel aufweisen sollten, um eine optimale Löslichkeit zu erreichen (similia similibus sulvuntur).

Zur präziseren Auswahl der Lösungsmittel verwendet man - wenn keine ausreichenden anderen Informationen zum zu lösenden Stoff vorliegen - die Löslichkeitsparameter nach Hildebrand, das Dipolmoment und/oder die Polarisierbarkeit. Die Daten können häufig aus Tabellen entnommen oder mittels Näherungsformel und Interpolieren aus der Molekülstruktur errechnet werden.

Diese ebenso einfache wie erfolgreiche Methode stößt schnell an Ihre Grenzen, wenn es aus prozesstechnischen Gründen notwendig wird, chemische Substanzen miteinander in Lösung zu bringen, deren chemische und physikalische Eigenschaften entgegengesetzter Natur sind.

Daher führen die zuvor beschriebenen Methoden zu keinem Erfolg bei dem Versuch, eine konzentrierte Lösung eines anorganischen Salzes und einer in Wasser schwer löslichen sauren organischen Verbindung herzustellen. Auch die Verwendung von Tensiden oder Emulgatoren führt nicht zur Lösung des Problems. Organische Lösungsmittel wie Alkohole oder halogenierte Kohlenwasserstoffe sind zwar bestens geeignet die organische Säure zu lösen, ein anorganisches Salz bleibt in diesem Milieu jedoch ungelöst.

Benzoesäure, Salizylsäure und Sorbinsäure sind Beispiele für organische Säuren. Sie dienen unter anderem als Konservierungsmittel.

Die Benzoesäure ist eine mäßig starke Säure, die in Wasser schwer, in Alkohol und Ether aber leicht löslich, mit Wasserdampf flüchtig und lichtempfindlich ist. Sie dient vornehmlich zur Konservierung von Fettprodukten, Obsterzeugnissen, Gemüseprodukten sowie von Fischereierzeugnissen und Eiprodukten. Ihre Wirkung beruht auf der undissoziierten Säure (pKₐ=4,10). Ihre antiseptische Wirkung richtet sich vorwiegend gegen Hefen und Pilze, insbesondere gegen Schimmelpilze.

Sorbinsäure ist sehr wenig in kaltem Wasser löslich, jedoch leicht löslich in Alkohol und Ether. Sie wird zur Konservierung von kosmetischen und pharmazeutischen Erzeugnissen, für Wein und Margarine angewandt. Die konservierende Wirkung beruht auf der undissoziierten Säure.

Salizylsäure ist in kaltem Wasser nur zu etwa 0,2 g pro 100 g, in heißem Wasser besser löslich. Sie wirkt besser gegen Pilze und Hefen als gegen Bakterien. Aufgrund ihrer phenolischen Gruppe ist ihre antibakterielle Wirksamkeit besser als die der Benzoesäure.

EP 0505378 B1 beschreibt ein stabiles, emulgierbares Konzentrat, das a) eine im Wesentlichen in Wasser unlösliche Chemikalie (z. B. Phosphat, substituierte Benzoesäuren etc.), b) ein Tensid, c) einen organischen Verdünner (z. B. Sojabohnenöl, langkettige Alkohole etc.) und d) ein Lösungsmittel umfasst, wobei das Lösungsmittel aus d₁) einer ersten Komponente in ausreichender Menge und mit ausreichender Hydrophilie, um die im Wesentlichen in Wasser unlösliche Chemikalie zu lösen, mit bestimmten Hansen-Lösungsmittelfaktoren und d₂) einer zweiten Komponente besteht, die ein hydrophobes Lösungsmittel mit einem HLB-Wert von 2 bis 8 ist. Ein anorganisches Salz ist in dem Konzentrat nicht gelöst. Zudem ist es nicht verdünnbar, sondern wird weniger konzentriert als Emulsion eingesetzt.

EP 1 110 452 beschreibt Konzentrate, die Benzoesäure oder Benzoesäure derivate, Lösungsmittel wie Alkohole und organische Säuren enthalten.

Eine gewisse, wenngleich unzureichende Löslichkeit von anorganischen Salzen wie Ammoniumsulfat zeigt sich bei Verwendung von Chloroform als Lösungsmittel, das auch saure organische Verbindungen wie Benzoesäure oder 4-Hydroxybenzoesäure vollständig zu lösen vermag.

Die Aufgabe der vorliegenden Erfindung besteht in der Bereitstellung eines Verfahrens zur Herstellung stabiler, von bis zu 20 gew.-%iger Lösungen (stabile Konzentrate) von in Wasser schwer löslichen sauren organischen Verbindungen, wobei die Lösungen gleichzeitig anorganische Salze in einer Konzentration von bis zu 20 Gew.-% enthalten .

Bei der Suche nach einem geeigneten Verfahren wurde völlig überraschend, weil aus physikalisch-chemischen Erkenntnissen nicht vorhersehbar, gefunden, dass stark konzentrierte Ameisensäure ein wesentlicher Teil der Lösung der Aufgabe ist.

Die Aufgabe wird daher durch das erfindungsgemäße Verfahren gelöst, indem
(a) im Wesentlichen wasserfreie Ameisensäure mit wenigstens einem im Wesentlichen wasserfreien Tensid (b) in einem Verhältnis von a : b = 40 : 1 bis 75 : 20 versetzt wird,
(c) wenigstens ein anorganisches Salz in einer Konzentration von bis zu 20 Gew.-% in dem Ameisensäure-Tensid-Gemisch gelöst wird, wobei das anorganische Salz ausgewählt wird aus der Gruppe, bestehend aus Ammonium- oder Alkali- oder Erdalkalisalzen der Schwefelsäure oder Ammonium- oder Alkali- oder Erdalkalisalzen der Phosphorsäure oder Gemischen davon,
(d) wenigstens ein C₂ bis C₁₂-Alkohol zu dem Gemisch aus (a), (b) und (c) zugefügt wird und
(e) wenigstens eine in Wasser schwer lösliche saure organische Verbindung, ausgewählt aus der Gruppe, bestehend aus Desinfektionsmitteln, Pflanzenschutzmitteln, Insektiziden, Düngemitteln, Pflanzennährstoffen, Pflanzenwachstumsbeschleunigern, Herbiziden, Bakteriziden, Fungiziden, Nematoziden, Entlaubungsmitteln, Fumiganten und Konservierungsmitteln und Gemischen daraus, wobei in dem Gemisch, bestehend aus (a), (b), (c) und (d), gelöst wird.

Die Aufgabe wird weiterhin durch die Bereitstellung eines stabilen Konzentrats von in Wasser schwer löslichen sauren organischen Verbindungen, wobei das Konzentrat gleichzeitig anorganische Salze in einer Konzentration von bis zu 20 Gew.-% enthält, gelöst. Ebenso wird die Aufgabe durch Verwendung eines nach dem erfindungsgemäßen Verfahren herstellbaren stabilen Konzentrats zur Herstellung von Lösungen mit anderen Konzentrationen in anderen Lösungsmitteln sowie durch eine Zusammensetzung gelöst, enthaltend ein nach einem erfindungsgemäßen Verfahren herstellbares stabiles Konzentrat zur Herstellung von Lösungen mit anderen Konzentrationen in anderen Lösungsmitteln. Die erfindungsgemäße konzentrierte Lösung kann also zur Verdünnung oder zur Konzentrationseinstellung in andere protische oder aprotisch polare Lösungsmittel eingetragen werden, wodurch erneut stabile Lösungen zur Weiterverwendung entstehen.

Unter dem Ausdruck "im Wesentlichen wasserfreie Ameisensäure" wird erfindungsgemäß 98 Gew.-%ige Ameisensäure verstanden.

Mit dem in dieser Anmeldung verwendeten Ausdruck "schwer löslich" ist gemeint, dass die Löslichkeit der Verbindung in Wasser für alle praktischen Zwecke unzureichend ist.

Der Ausdruck "stabile Lösung" in dieser Anmeldung bedeutet, dass die Lösung auch nach dreimonatiger Lagerung bei beliebiger Temperatur zwischen 4°C und 30°C noch homogen ist, d. h. keine Phasentrennung auftritt.

Der Ausdruck "in Wasser schwer lösliche Verbindung" bedeutet in dieser Anmeldung, dass sich nicht mehr als 15 g der Verbindung bei 20°C in einem Liter Wasser lösen können.

Mit dem Ausdruck "praktisch wasserfreie Tenside" ist in dieser Anmeldung gemeint, dass die Tenside maximal 7 Gew.-% Wasser enthalten.

In den Unteransprüchen sind vorteilhafte Ausführungsformen der Erfindung enthalten.

Vorzugsweise liegt die wenigstens eine in Wasser schwer lösliche saure organische Verbindung in einer ihrem Einsatz gemäßen wirksamen Menge im Konzentrat vor.

Bevorzugt lösen sich maximal 10 bis 1 g der in Wasser schwer löslichen Verbindung bei 20°C in 1 l Wasser, bevorzugter lösen sich weniger als 1 bis 0,1 g der in Wasser schwer löslichen Verbindung bei 20°C in 1 l Wasser. Noch bevorzugter lösen sich weniger als 0,1 g der in Wasser schwer löslichen Verbindung bei 20°C in 1 l Wasser.

Die verwendeten Tenside sind bevorzugt anionische oder nichtionische Tenside. Als anionische Tenside werden bevorzugt Alkalisalze oder Ammoniumsalze von Alkyl-, Alkylarylsulfaten, Alkyl- und/oder Alkylarylsulfonaten mit gerader oder verzweigter Kette mit einer Kettenlänge von C₈ bis C₁₈ verwendet. Als nichtionische Tenside werden bevorzugt Fettalkoholethoxylate der allgemeinen Formel CH₃-(CH₂)₁₀₋₁₆-(O-C₂H₄)₁₋₂₅-OH, Fettalkoholpropoxylate der allgemeinen Formel CH₃-(CH₂)₁₀₋₁₆-(O-C₃H₆)₁₋₂₅-OH, Alkylpolyglykoside der allgemeinen Formel CH₃-(CH₂)₁₀₋₁₆-(O-Glykosid)₁₋₃-OH und/oder Nonylphenolethoxylate der allgemeinen Formel C₉H₁₉-(C₆H₆)-(O-C₂H₄)₁₋₂₅-OH verwendet.

Lineare oder verzweigte aliphatische Alkohole mit einer Kettenlänge von C₂ bis C₁₂ werden bevorzugt als Alkohole verwendet. Diese können gesättigte, ungesättigte oder mehrfach ungesättigte aliphatische Alkohole sein.

Bevorzugt werden die Mengen der einzelnen Komponente so gewählt werden, dass in der Gesamtlösung folgende Konzentrationen vorliegen:

| | |
|---|---|
| (a) Ameisensäure | 10 - 90 Gew.-%, bevorzugt 20 - 70 Gew.-%, |
| | noch bevorzugt 40 - 60 Gew.-%, |
| (b) Tenside | 0,1-50 Gew.-%, bevorzugt 1,0-40 Gew.-%, |
| | bevorzugter 4,0 - 20 Gew.-%, |
| (c) anorganische Salze | 1,0 - 15 Gew.-%, |
| (d) Alkohole | 1,0 - 60 Gew.-%, bevorzugt 5,0 - 40 Gew.-%, |
| (e) in Wasser schwer lösliche saure organische Verbindungen | 3,0 - 20 Gew.-%, |

wobei sich die Mengen an (a), (b), (c), (d) und (e) auf 100 Gew.-% ergänzen.

Als schwer lösliche saure organische Verbindungen werden erfindungsgemäß bevorzugt Benzoesäure, 4-Hydroxybenzoesäure, 2,4-Hexadiensäure, 3-Hydroxybenzoesäure, 2-Hydroxybenzoesäure, 3,4,5-Trihydroxybenzoesäure, 2,4-Dichlorphenoxyessigsäure, 2,4,5-Trichlorphenoxyessigsäure, 4-(2,4-Dichlorphenoxy)buttersäure, 2-Methyl-4-chlorphenoxyessigsäure, 2-(4-Chlor-2-methylphenoxy)propionsäure, 3,6-Dichlor-O-anissäure, 4-Chlor-2-oxobenzothiazolin-3-yl-essigsäure, N-1-Naphthylphthalamidsäure, 2,4,5-Trichlorphenoxyessigsäure, 2-Methoxy-3,5,6-trichlorbenzoesäure, 4-(4-Chlor-2-methylphenoxy)buttersäure, 2-(2,4-Dichlorphenoxy)propionsäure oder 2,3,6-Trichlorphenylessigsäure oder Gemische aus den vorstehenden Verbindungen verwendet.

Als anorganische Salze werden bevorzugt Ammonium-, Kalium-, Calcium-, Magnesium- und Natriumverbindungen von Nitraten, Phosphaten, Hydrogenphosphaten, Dihydrogenphosphaten, Sulfaten, Hydrogensulfaten, bevorzugter Ammoniumsulfat, Ammoniumhydrogenphosphat und Kaliumsulfat, noch bevorzugter Ammoniumsulfat verwendet.

Als Alkohole werden C₂ bis C₁₂-Alkohole eingesetzt.

Vorzugsweise enthält die erfindungsgemäße Zusammensetzung ein nach dem erfindungsgemäßen Verfahren herstellbares stabiles Konzentrat zur Herstellung von Lösungen mit anderen Konzentrationen in anderen protischen oder aprotischen polaren Lösungsmitteln, wobei die saure organische Verbindung in einer ihrem Einsatz gemäßen wirksamen Menge im Konzentrat vorliegt. Vorzugsweise sind die protischen oder aprotischen polaren Lösungsmittel ausgewählt aus der Gruppe, bestehend aus Wasser, Alkoholen, insbesondere gradkettigen C₁ bis C₄-Alkoholen, Glykole, Essigsäure, Essigsäureanhydrid, Dioxan, Tetrahydrofuran, Dimethylformamid, Dimethylacetamid, Dimethylsulfoxid (vgl. Anspruch 12).

Das nach einem erfindungsgemäßen Verfahren herstellbare stabile Konzentrat wird vorzugsweise zur Herstellung von Lösungen mit anderen Konzentrationen in anderen protischen oder aprotischen polaren Lösungsmitteln verwendet, wobei die verdünnte Lösung mindestens 0,1 Vol.-% des Konzentrats enthält.

Im Folgenden werden Beispiele von bevorzugten Ausführungsformen sowie ein Vergleichsbeispiel gezeigt.

### Beispiel 1

| Komponenten | Gew.-% |
|---|---|
| Ameisensäure (98 Gew.-%) | 46,0 Gew.-% |
| Alkylarylsulfonat-Na | 12,0 |
| Nonylphenolethoxylat [7EO] | 5,0 |
| 2-Propanol | 22,0 |
| Benzoesäure | 10,0 |
| Natriumdihydrogenphosphat | 5,0 |

Die Anteile der Komponenten Ameisensäure (98 Gew.-%), Alkylarylsulfonat-Na, Nonylphenolethoxylat [7EO], 2-Propanol, Benzoesäure und Natriumdihydrogenphosphat ergänzen sich zu 100 Gew.-%.

Das hergestellte Konzentrat ist für mindestens sieben Monate stabil, d. h. es kommt zu keiner Phasentrennung.

### Beispiel 2

In einer anderen erfindungsgemäßen Ausführungsform wird ein Verfahren zur Herstellung einer konzentrierten Lösung von 4-Hydroxybenzoesäure bereitgestellt, die gleichzeitig Ammoniumsulfat enthält.

Wird die protische Ameisensäure mit praktisch wasserfreien anionischen und/oder nichtionischen Tensiden versetzt, so ist die daraus resultierende Lösung geeignet, Ammoniumsulfat in hoher Konzentration zu lösen. Fügt man dieser Lösung Fettalkohole hinzu, so löst sich neben dem bereits gelösten Sulfat auch die Hydroxybenzoesäure.

Das so hergestellte Konzentrat kann mit anderen Lösungsmitteln, wie Wasser, verdünnt werden, ohne dass eine Phasentrennung eintritt, wobei die verdünnte Lösung mindestens 0,1 Vol.-% des Konzentrats enthält.

| Komponenten | Gew.-% |
|---|---|
| Ameisensäure (98 Gew.-%) | 55,0 |
| Alkylsulfonat (C12-C18)-Na | 8,0 |
| Ethanol | 16,0 |
| Benzylalkohol | 5,0 |
| 4-Hydroxybenzoesäure | 8,0 |
| Ammoniumsulfat | 5,0 |

Die Anteile der Komponenten Ameisensäure (98 Gew.-%), Alkylsulfonat (C12-C18)-Na, Ethanol, Benzylalkohol, 4-Hydroxybenzoesäure und Ammoniumsulfat ergänzen sich zu 100 Gew.-%.

Das hergestellte Konzentrat ist für mindestens sieben Monate stabil, d. h. es kommt zu keiner Phasentrennung.

### Beispiel 3

| Komponenten | Gew.-% |
|---|---|
| Ameisensäure (98 Gew.-%) | 50,0 |
| Alkylsulfonat (C12-C18)-Na | 7,0 |
| Alkylpolyglykosid | 5,0 |
| 2-Hydroxybenzoesäure | 7,0 |
| Kaliumhydrogensulfat | 7,0 |
| 1-Propanol | 18,0 |
| Ethanol | 6,0 |

Die Anteile der Komponenten Ameisensäure 98 Gew.-%, Alkylsulfonat (C12-C18)-Na, Alkylpolyglykosid, 2-Hydroxybenzoesäure, Kaliumhydrogensulfat, 1-Propanol und Ethanol ergänzen sich zu 100 Gew.-%.

Das hergestellte Konzentrat ist für mindestens sieben Monate stabil, d. h. es kommt zu keiner Phasentrennung.

### Vergleichsbeispiel

| Komponenten | Gew.-% |
|---|---|
| Wasser (98 Gew.-%) | 55,0 |
| 4-Hydroxybenzoesäure | 5,0 |
| Alkylarylsulfonat-Na | 12,0 |
| 2-Propanol | 20,0 |
| Kaliumhydrogensulfat | 8,0 |

Die Anteile der Komponenten Wasser (55 Gew.-%), 4-Hydroxybenzoesäure, Alkylarylsulfonat-Na, 2-Propanol und Kaliumhydrogensulfat ergänzen sich zu 100 Gew.-%.

In der Lösung des Vergleichsbeispiels bildet sich bereits nach kurzer Zeit ein kristalliner Niederschlag, der fast vollständig aus 4-Hydroxybenzoesäure besteht.

## Patentansprüche

1. Verfahren zur Herstellung stabiler, von bis zu 20 gew.%iger Lösungen von in Wasser schwer löslichen sauren organischen Verbindungen, wobei die Lösungen gleichzeitig anorganische Salze in einer Konzentration von bis zu 20 Gew.-% enthalten, **dadurch gekennzeichnet, dass**
(a) im Wesentlichen wasserfreie Ameisensäure mit wenigstens einem im Wesentlichen wasserfreien Tensid (b) in einem Verhältnis von a : b = 40 : 1 bis 75 : 20 versetzt wird,
(c) wenigstens ein anorganisches Salz in einer Konzentration von bis zu 20 Gew.-% in dem Ameisensäure-Tensid-Gemisch gelöst wird, wobei das anorganische Salz ausgewählt wird aus der Gruppe, bestehend aus Ammonium- oder Alkali- oder Erdalkalisalzen der Schwefelsäure oder Ammonium- oder Alkali- oder Erdalkalisalzen der Phosphorsäure oder Gemischen davon,
(d) wenigstens ein C₂ bis C₁₂-Alkohol zu dem Gemisch aus (a), (b) und (c) zugefügt wird und
(e) bis zu 20 Gew.-% wenigstens einer in Wasser schwer löslichen sauren organischen Verbindung, ausgewählt aus der Gruppe, bestehend aus Desinfektionsmitteln, Pflanzenschutzmitteln, Insektiziden, Düngemitteln, Pflanzennährstoffen, Pflanzenwachstumsbeschleunigern, Herbiziden, Bakteriziden, Fungiziden, Nematoziden, Entlaubungsmitteln, Fumiganten und Konservierungsmitteln und Gemischen daraus, in dem Gemisch, bestehend aus (a), (b), (c) und (d), gelöst wird.

2. Verfahren gemäß Anspruch 1, wobei die wenigstens eine in Wasser schwer lösliche saure organische Verbindung (e) eine Löslichkeit von bis zu 10 g Substanz in 1 l Wasser bei 20°C, bevorzugter von weniger als 1 g Substanz in 1 l Wasser bei 20°C , noch bevorzugter von weniger als 0,1 g der substanz in 1 l Wasser bei 20°C aufweist.

3. Verfahren gemäß einem der Ansprüche 1 bis 2, wobei die verwendeten Tenside (b) anionische Tenside sind, ausgewählt aus der Gruppe, bestehend aus Alkalisalzen und Ammoniumsalzen von Alkyl-, Alkylarylsulfaten, Alkyl- und/oder Alkylarylsulfonaten mit gerader oder verzweigter Kette mit einer Kettenlänge von C₈ bis C₁₈.

4. Verfahren gemäß einem der Ansprüche 1 bis 3 wobei die verwendeten Tenside (b) nichtionische Tenside sind, ausgewählt aus der Gruppe, bestehend aus Fettalkoholethoxylaten, Fettalkoholpropoxylaten, Alkylpolyglykosiden und Nonylphenolethoxylaten.

5. Verfahren gemäß einem der Ansprüche 1 bis 4 wobei die wenigstens eine in Wasser schwer lösliche saure organische Verbindung (e) ausgewählt ist aus der Gruppe, bestehend aus Benzoesäure, 4-Hydroxybenzoesäure, 2,4-Hexadiensäure, 3-Hydroxybenzoesäure, 2-Hydroxybenzoesäure, 3,4,5-Trihydroxybenzoesäure, 2,4-Dichlorphenoxyessigsäure, 2,4,5-Trichlorphenoxyessigsäure, 4-(2,4-Dichlorphenoxy)-buttersäure, 2-Methyl-4-chlorphenoxyessigsäure, 2-(4-Chlor-2-methylphenoxy)propionsäure, 3,6-Dichlor-O-anissäure, 4-Chlor-2-oxobenzothiazolin-3-yl-essigsäure, N-1-Naphthylphthalamidsäure, 2-Methoxy-3,5,6-trichlorbenzoesäure, 4-(4-Chlor-2-methylphenoxy)buttersäure, 2-(2,4-Dichlorphenoxy)propionsäure und 2,3,6-Trichlorphenylessigsäure, wobei Benzoesäure, 2-Hydroxybenzoesäure, 4-Hydroxybenzoesäure oder Gemische davon bevorzugt sind.

6. Verfahren gemäß einem der Ansprüche 1 bis 5, wobei die verwendeten Alkohole (d) lineare oder verzweigte aliphatische Alkohole mit einer Kettenlänge von C₆ bis C₁₂ sind, ausgewählt aus der Gruppe, bestehend aus gesättigten, ungesättigten oder mehrfach ungesättigten Alkohole.

7. Verfahren gemäß einem der Ansprüche 1 bis 6, wobei die Mengen der einzelnen Komponenten so gewählt werden, dass in der Gesamtlösung folgende Konzentrationen vorliegen:
| | |
|---|---|
| (a) Ameisensäure | 10 - 90 Gew.-%, bevorzugt 20 - 70 Gew.-%, noch bevorzugter 40 - 60 Gew.-%, |
| (b)Tenside | 0,1- 50 Gew.-%, bevorzugt 1,0 und 40 Gew.-%, noch bevorzugter 4,0 - 20 Gew.-%, |
| (c) anorganische Salze | 1,0 - 15 Gew.-%, |
| (d)Alkohole | 1,0 - 60 Gew.-%, bevorzugt 5 und 40 Gew.-%, |
| (e) in Wasser schwer lösliche saure organische Verbindungen | 3,0 - 20 Gew.-%, |
wobei sich die Mengen an (a), (b), (c), (d) und (e) auf 100 Gew.-% ergänzen.

8. Stabiles Konzentrat, enthaltend
(a) 10 - 90 Gew.-% im Wesentlichen wasserfreie Ameisensäure,
(b)0,1 - 50 Gew.-% wenigstens eines im Wesentlichen wasserfreien Tensids,
(c) 1,0 - 15 Gew.-% wenigstens eines anorganischen Salzes, ausgewählt aus der Gruppe, bestehend aus Ammonium- oder Alkali- oder Erdalkalisalzen der Schwefelsäure oder Ammonium- oder Alkali- oder Erdalkalisalzen der Phosphorsäure oder Gemischen davon,
(d) 1,0 - 60 Gew.-% wenigstens eines C₂ bis C₁₂-Alkohols,
(e) 3,0 - 20 Gew.-% wenigstens einer in Wasser schwer löslichen sauren organischen Verbindung, ausgewählt aus der Gruppe, bestehend aus Desinfektionsmitteln, Pflanzenschutzmitteln, Insektiziden, Düngemitteln, Pflanzennährstoffen, Pflanzenwachstumsbeschleunigern, Herbiziden, Bakteriziden, Fungiziden, Nematoziden, Entlaubungsmitteln, Fumiganten und Konservierungsmitteln und Gemischen daraus,
wobei sich die Mengen an (a), (b), (c), (d) und (e) auf 100 Gew.-% ergänzen, und
wobei die Ameisensäure und das Tensid/die Tenside im Verhältnis a: b = 40 : 1 bis 75 : 20 gemischt sind.

9. Stabiles Konzentrat gemäß Anspruch 8, enthaltend
(a) 20 - 70 Gew.-%, bevorzugter 40 - 60 Gew.-%, im Wesentlichen wasserfreie Ameisensäure,
(b) 1,0 - 40 Gew.-%, bevorzugter 4,0 - 20 Gew.-%, wenigstens eines im Wesentlichen wasserfreien Tensids,
(c) 1,0 - 15 Gew.-% wenigstens eines anorganischen Salzes,
(d) 5,0 - 40 Gew.-% wenigstens eines Alkohols,
(e) 3,0 - 20 Gew.-% wenigstens einer in Wasser schwer löslichen sauren organischen Verbindung,
wobei sich die Mengen an (a), (b), (c), (d) und (e) auf 100 Gew.-% ergänzen, und
wobei die Ameisensäure und das Tensid/die Tenside im Verhältnis a : b = 40 : 1 bis 75 : 20 gemischt sind.

10. Zusammensetzung, enthaltend ein nach einem Verfahren gemäß einem der Ansprüche 1 bis 7 herstellbares stabiles Konzentrat zur Herstellung von Lösungen mit anderen Konzentrationen in anderen protischen oder aprotischen polaren Lösungsmitteln.

11. Zusammensetzung gemäß Anspruch 10, wobei die protischen oder aprotischen polaren Lösungsmittel ausgewählt sind aus der Gruppe, bestehend aus Wasser, Alkoholen, insbesondere gradkettigen C₁ bis C₄-Alkoholen, Glykole, Essigsäure, Essigsäureanhydrid, Dioxan, Tetrahydrofuran, Dimethylformamid, Dimethylacetamid, Dimethylsulfoxid.

12. Zusammensetzung gemäß einem der Ansprüche 10 oder 11, wobei die wenigstens eine in Wasser schwer lösliche saure organische Verbindung (e) in einer ihrem Einsatz gemäßen wirksamen Menge enthalten ist.

13. Verwendung des nach einem Verfahren gemäß einem der Ansprüche 1 bis 7 herstellbaren stabilen Konzentrats zur Herstellung von Lösungen mit anderen Konzentrationen in anderen protischen oder aprotischen polaren Lösungsmitteln, wobei die verdünnte Lösung 0,1 Vol.-% bis 50 Vol.-% des Konzentrats enthält.

## Claims

1. A process for preparing stabile up to 20 weight% solutions of acidic organic compounds hardly soluble in water, wherein the solutions at the same time comprise inorganic salts at a concentration of up to 20 weight%, **characterized in that**
(a) substantially anhydrous formic acid is mixed with at least one substantially anhydrous tenside (b) at a ratio a:b = from 40:1 to 75:20,
(b) at least one inorganic salt is dissolved at a concentration of up to 20 weight% in the formic acid/tenside mixture, wherein the inorganic salt is selected from the group consisting of ammonium salts or alkaline salts or alkaline earth salts of sulphuric add or ammonium salts or alkaline salts or alkaline earth salts of phosphoric acid or mixtures thereof;
(c) at least one C₂ to C₁₂ alcohol is added to the mixture (a), (b) and (c) and
(d) up to 20 weight% of at least one acidic organic compound hardly soluble in water, selected from the group consisting of disinfectants, plant protective agents, insecticides, fertilizers, plant nutrients, plant growth accelerators, herbicides, bactericides, fungicides, nematocides, defoliants, fumigants and preservatives and mixtures thereof, is dissolved in the mixture consisting of (a), (b), (c) and (d).

2. The process according to claim 1 wherein the at least one acidic organic compound (e) hardly soluble in water has a solubility of up to 10 g substance in 1 l water at 20°C, more preferable of less than 1 g substance in 1 l water at 20°C, even more preferable of less than 0.1 g substance in 1 l water at 20°C.

3. The process according to claim 1 wherein the used tensides (b) are anionic tensides selected from the group consisting of alkaline salts and ammonium salts of alkyl, alkylaryl sulfates, alkyl and/or alkylaryl sulfonates with a straight or branched chain of a chain length from C₈ to C₁₈.

4. The process according to one of the claims 1 to 3 wherein the used tensides (b) are nonionic tensides selected from the group consisting of fatty alcohol ethoxylate, fatty alcohol propoxylate, alkylpolyglycosides and nonylphenol ethoxylates.

5. The process according to one of the claims 1 to 4, wherein the at least one acidic organic compound hardly soluble in water (e) is selected from the group consisting of benzoic acid, 4-hydroxybenzoic acid, 2,4-hexadiene acid, 3-hydroxybenzoic acid, 2-hydroxybenzoic acid, 3,4,5-trihydroxybenzoic acid, 2,4-dichlorophenoxyacetic acid, 2,4,5-trichlorophenoxyacetic acid, 4-(2,4-dichlorophenoxy)butyric acid, 2-methyl-4-chlorophenoxyacetic acid, 2-(4-chloro-2-methylphenoxy)propion acid, 3,6-dichloro-O-anisic acid, 4-chloro-2 oxobenzothiazolin-3-ylacetic acid, N-1-naphtylphtalamic acid, 2-methoxy-3,5,6-trichlorobenzoic acid, 4-(4-chloro-2-methylphenoxy)butyric acid, 2-(2,4-dichlorophenoxy)propion acid and 2,3,6-trichlorophenyacetic acid, wherein benzoic acid, 2-hydroxybenzoic acid, 4-hydroxybenzoic acid or mixtures thereof are preferred.

6. The process according to one of the claims 1 to 5 wherein the used alcohols (d) are linear or branched aliphatic alcohols of a chain length from C₈ to C₁₂ selected from the group consisting of saturated, unsaturated or polyunsaturated alcohols.

7. The process according to one of the claims 1 to 6 wherein quantities of the individual components are selected such that the whole solution comprises the following concentrations:
| | |
|---|---|
| (a) formic acid | 10 - 90 weight %, preferably 20-70 weight%, even more preferably 40-60 weight%, |
| (b) tensides | 0.1 - 50 weight%, preferably 1.0 - 40 weight%, even more preferably 4.0 - 20 weight% |
| (c) inorganic salts | 1.0 - 15 weight%, |
| (d) alcohols | 1.0 - 60 weight%, preferably 5 and 40 weight% |
| (e) acidic organic compound hardly soluble in water | 3.2 - 30 weight% |
wherein the quantities of (a), (b), (c), (d) and (e) complement one another to 100 weight percent.

8. A stabile concentrate comprising
(a) 10 - 90 weight% of substantially anhydrous formic acid,
(b) 0.1 - 50 weight% of at least one substantially anhydric tenside
(c) 1.0 - 15 weight% of at least one inorganic salt selected from the group consisting of ammonium salts or alkaline salts or alkaline earth salts of sulphuric acid or ammonium salts or alkaline salts or alkaline earth salts of phosphoric acid or mixtures thereof,
(d) 1.0 - 60 weight% of at least one C₂ to C₁₂ alcohol,
(e) 3.0 - 20 weight% of at least one acidic organic compound hardly soluble in water, selected from the group consisting of disinfectants, plant protective agents, insecticides, fertilizers, plant nutrients, plant growth accelerators, herbicides, bactericides, fungicides, nematocides, defoliants, fumigants and preservatives and mixtures thereof, wherein the quantities of (a), (b), (c), (d) and (e) complement one another to 100 weight percent, and wherein the formic acid and the tenside / tensides are mixed at a ratio of a:b = from 40:1 to 75:20.

9. The stabile concentrate according to claim 8 comprising
(a) 20 - 70 weight%, more preferably 40 - 60 weight% of substantially anhydrous formic acid,
(b) 1.0 - 40 weight%, more preferably 4.0 - 20 weight% of at least one substantially anhydric tenside,
(c) 1.0 - 15 weight% of at least one inorganic salt,
(d) 5.0 - 40 weight% of at least one alcohol,
(e) 3.0 - 20 weight% of at least one acidic organic compound hardly soluble in water,
(f) wherein the quantities of (a), (b), (c), (d) and (e) complement one another to 100 weight percent, and wherein the formic acid and the tenside / tensides are mixed at a ratio of a:b = from 40:1 to 75:20.

10. A composition comprising a stabile concentrate producible according to one of the claims 1 to 7 for the preparation of solutions with different concentrations in different protic and aprotic polar solvents.

11. The composition according to claim 10 wherein the protic and aprotic polar solvents are selected from the group consisting of water, alcohols, in particular straight-chained C₁ to C₄ alcohols, glycols, acetic acid, acetic anhydride, dioxane, tetrahydrofurane, dimethylformamide, dimethylacetamide, dimethylsulfoxide.

12. The composition according to one of the claims 10 or 11 wherein the at least one acidic organic compound hardly soluble in water (3) is comprised in an effective quantity appropriate to its application.

13. Use of a stabile concentrate producible according to one of the claims 1 to 7 for the preparation of solutions with different concentrations in different protic and aprotic polar solvents, wherein the diluted solution comprises from 0.1 volume% to 50 volume% of the concentrate.

## Revendications

1. Procédé de préparation de solutions stables comprenant jusqu'à 20 % en poids de composés organiques acides difficilement solubles dans l'eau, lesdites solutions contenant en même temps des sels inorganiques dans une concentration pouvant atteindre 20 % en poids, **caractérisé en ce que** l'on
a) ajoute un agent tensioactif essentiellement exempt d'eau (b) à de l'acide formique essentiellement anhydre (a), dans un rapport a : b = 40 : 1 à 75 : 20,
c) dissout au moins un sel inorganique (c) dans une concentration jusqu'à 20 % en poids dans le mélange acide formique-agent tensioactif, le sel inorganique étant choisi dans groupe constitué de sels d'ammonium ou alcalins ou alcalino-terreux de l'acide sulfurique ou de sels d'ammonium ou alcalins ou alcalino-terreux de l'acide phosphorique ou de leurs mélanges,
d) ajoute au moins un alcool en C₂ à C₁₂ (d) au mélange de (a), (b) et (c) et
e) dissout jusqu'à 20 % en poids d'au moins un composé organique acide difficilement soluble dans l'eau (e), choisi dans le groupe constitué des désinfectants, des produits phytosanitaires, des insecticides, des fertilisants, des nutriments pour plantes, des accélérateurs de la croissance végétale, des herbicides, des bactéricides, des fongicides, des nématocides, des désherbants, des fumigants, des conservateurs et de leurs mélanges, dans le mélange constitué de (a) , (b), (c) et (d).

2. Procédé selon la revendication 1, l'au moins un composé organique acide difficilement soluble dans l'eau (e) présentant une solubilité pouvant aller jusqu'à 10 g de substance dans 1 l d'eau à 20 °C mais étant plus préférentiellement inférieure à 1 g de substance dans 1 l d'eau à 20 °C et encore plus préférentiellement inférieure à 0,1 g de substance dans 1 l d'eau à 20 °C.

3. Procédé selon l'une des revendications 1 à 2, les agents tensioactifs (b) mis en oeuvre étant des agents tensioactif anioniques choisis dans groupe constitué des sels alcalins et d'ammonium d'alkylsulfates, d'alkylarylsulfates, d'alkylsulfonates et/ou d'alkylarylsulfonates présentant une chaîne linéaire ou ramifiée dont la longueur est comprise entre C₈ et C₁₈.

4. Procédé selon l'une des revendications 1 à 3, les agents tensioactifs (b) mis en oeuvre étant des agents tensioactifs non-ioniques choisis dans le groupe constitué des éthoxylates d'alcools gras, des propoxylates d'alcools gras, des alkylpolyglycosides et des éthoxylates de nonylphénol.

5. Procédé selon l'une des revendications 1 à 4, l'au moins un composé organique acide difficilement soluble dans l'eau (e) étant choisi dans le groupe constitué d'acide benzoïque, d'acide 4-hydroxybenzoïque, d'acide héxadién-(2,4)-ique, d'acide 3-hydroxybenzoïque, d'acide 2-hydroxybenzoïque, d'acide 3,4,5-trihydroxybenzoïque, d'acide 2,4-dichlorophénoxyacétique, d'acide 2,4,5-trichlorophénoxyacétique, d'acide 4-(2,4-dichlorophénoxy)-butyrique, d'acide 2-méthyl-4-chlorophénoxyacétique, d'acide 2-(4-chloro-2-méthylphénoxy)-propionique, d'acide 3,6-dichloro-4-méthoxybenzoïque, d'acide 4-chloro-2-oxobenzothiazolin-3-yl-acétiqiue, d'acide N-1-naphtylphtalamidique, d'acide 2-méthoxy-3,5,6-trichlorobenzoïque, d'acide 4-(4-chloro-2-méthylphénoxy)-butyrique, d'acide 2-(2,4-dichlorophénoxy)-propionique et d'acide 2,3,6-trichlorophénylacétique, l'acide benzoïque, l'acide 2-hydroxybenzoïque, l'acide 4-hydroxybenzoïque ou leurs mélanges étant préférés.

6. Procédé selon l'une des revendications 1 à 5, les alcools (d) mis en oeuvre étant des alcools aliphatiques linaires ou ramifiés dont la longueur de chaîne est comprise entre C₆ et C₁₂, choisis dans le groupe constitué des alcools saturé, insaturés ou polyinsaturés.

7. Procédé selon l'une des revendications 1 à 6, les quantités de chacun des composants étant choisies de façon à obtenir dans la solution globale les concentrations suivantes :
(a) Acide formique
10 à 90 % en poids, de préférence 20 à 70 % en poids, encore plus préférentiellement 40 à 60 % en poids,
(b) Agents tensioactifs
0,1 à 50 % en poids, de préférence 1,0 à 40 % en poids, encore plus préférentiellement 4,0 à 20 % en poids,
(c) Sels inorganiques
1,0 à 15 % en poids,
(d) Alcools
1, 0 à 60 % en poids, de préférence 5 à 40 % en poids,
(e) Composés inorganiques acides difficilement solubles dans l'eau
3,0 à 20 % en poids,
la somme des quantités de (a), (b), (c), (d) et (e) étant de 100 % en poids.

8. Concentré stable, contenant
(a) 10 à 90 % en poids d'acide formique essentiellement anhydre,
(b) 0,1 à 50 % en poids d'au moins un agent tensioactif essentiellement exempt d'eau,
(c) 1,0 à 15 % en poids d'au moins un sel inorganique choisi dans groupe constitué de sels d'ammonium ou alcalins ou alcalino-terreux de l'acide sulfurique ou de sels d'ammonium ou alcalins ou alcalino-terreux de l'acide phosphorique ou de leurs mélanges,
(d) 1, 0 à 60 % en poids d'au moins un alcool en C₂ à C₁₂,
(e) 3,0 à 20 % en poids d'au moins un composé organiques acide difficilement soluble dans l'eau, choisi dans le groupe constitué des désinfectants, des produits phytosanitaires, des insecticides, des fertilisants, des nutriments pour plantes, des accélérateurs de la croissance végétale, des herbicides, des bactéricides, des fongicides, des nématocides, des désherbants, des fumigants, des conservateurs et de leurs mélanges,
la somme des quantités de (a), (b), (c), (d) et (e) étant de 100 % en poids, et
l'acide formique et l'agent tensioactif / les agents tensioactifs étant mélangés dans un rapport de a : b = 40 : 1 à 75 : 20.

9. Concentré stable selon la revendication 8, contenant
(a) 20 à 70 % en poids, plus préférentiellement 40 à 60 % en poids, d'acide formique essentiellement anhydre,
(b) 1,0 à 40 % en poids, plus préférentiellement 4,0 à 20 % en poids, d'au moins un agent tensioactif essentiellement exempt d'eau,
(c) 1,0 à 15 % en poids d'au moins un sel inorganique,
(d) 5,0 à 40 % en poids d'au moins un alcool,
(e) 3,0 à 20 % en poids d'au moins un composé organique acide difficilement soluble dans l'eau,
la somme des quantités de (a), (b), (c), (d) et (e) étant de 100 % en poids, et
l'acide formique et l'agent tensioactif / les agents tensioactifs étant mélangés dans un rapport de a : b = 40 : 1 à 75 : 20.

10. Composition, contenant un concentré stable pouvant être préparé selon un procédé selon l'une des revendications 1 à 7 pour réaliser des solutions présentant d'autres concentrations dans d'autres solvants polaires protiques ou aprotiques.

11. Composition selon la revendication 10, les solvants polaires protiques ou aprotiques étant choisis dans le groupe constitué d'eau, des alcools, notamment des alcools linaires en C₁ à C₄, des glycols, d'acide acétique, d'anhydride acétique, de dioxane, de tétrahydrofuranne, de diméthylformamide, de diméthylacétamide, de diméthylsulfoxyde.

12. Composition selon l'une des revendications 10 ou 11, l'au moins un composé organique acide difficilement soluble (e) étant présent dans une quantité efficace par rapport à son utilisation.

13. Utilisation du concentré stable pouvant être préparé selon un procédé selon l'une des revendications 1 à 7 pour réaliser des solutions présentant d'autres concentrations dans d'autres solvants polaires protiques ou aprotiques, la solution diluée contenant 0,1 % en volume à 50 % en volume du concentré.
